# DEMANDE DE BREVET EUROPEEN

(11) **EP 4 438 665 A1**
(43) Date de publication de la demande: **02.10.2024**
(21) Numéro de dépôt: 24167057.9
(22) Date de dépôt: 27.03.2024
(51) Int. Cl.: C08J 11/12, B29B 17/00, B29B 17/04, E01B 9/68

(54) **SEMELLES DE RAIL FABRIQUEES A PARTIR DE SEMELLES DE RAIL RECYCLEES**

(30) Priorité: 27.03.2023 FR 2302904
(71) Demandeur: Vape Rail International en Abrege V.R.I., 01460 Montreal-La-Cluse (FR)
(72) Inventeur: BRUNET, Stéphane, 69450 SAINT CYR AU MONT D'OR (FR); TREBUIL, Loïc, 69004 LYON (FR)
(74) Mandataire: Cabinet Laurent & Charras

(57) **Abrégé**

Matériau polymérique obtenu par mélange d'une poudre, issue de pièces usagées en caoutchouc de semelles de rail comprenant au moins 30% en poids de caoutchouc, avec un ou plusieurs plastifiants à une température allant de 80 et 130 °C, ladite poudre étant obtenue par des étapes de compression et cisaillement à une température inférieure à 80°C d'un granulat issu desdites semelles de rail. Semelle de rail comprenant ledit matériau polymérique.

## Description

### Domaine technique

La présente invention concerne un matériau polymérique dévulcanisé, des pièces de l'industrie ferroviaire, notamment des semelles de rail, comprenant ce matériau polymérique ainsi que leurs procédés de préparation.

### Art antérieur

L'invention concerne le recyclage de pièces usagées en caoutchouc vulcanisé issues de l'industrie ferroviaire, notamment de semelles de rail, afin de permettre la réutilisation du caoutchouc vulcanisé contenu dans ces pièces d'origine, sans perte appréciable de performance du composé de caoutchouc résultant. Plus particulièrement, l'invention concerne un matériau polymérique, dévulcanisé, dont les propriétés physico-chimiques permettent d'être revulcanisé et de pouvoir ainsi constituer la matière première de pièces de l'industrie ferroviaire, en particulier de semelles de rail, dans lequel il est incorporé.

De nos jours, pneumatiques et caoutchouc industriel sont les deux principaux secteurs consommateurs et transformateurs de matières premières en caoutchouc. Une pièce industrielle en caoutchouc est d'ordinaire à usage unique. Défectueuse ou usée, elle devient un déchet.

Les problématiques actuelles quant à l'épuisement des ressources fossiles et le souci croissant de préservation de l'environnement contribuent à la recherche de solutions pour recycler les déchets de l'industrie du caoutchouc.

Le caoutchouc naturel ou synthétique constitue la matière première des semelles de rail utilisée par l'industrie ferroviaire. Ces dernières sont posées directement sous le patin afin d'assurer une meilleure répartition des charges tout en augmentant l'élasticité des voies ballastées, ce qui améliore le comportement d'usure des composants de superstructure et le confort des passagers. La durée de vie d'une semelle est en moyenne de 15 ans.

Après ce temps, les semelles de rail usagées sont jetées dans la nature ou collectées pour être broyées et incinérées sans valorisation ultérieure.

Le caoutchouc contenu dans ces semelles est un mélange de caoutchouc naturel (NR) et caoutchouc styrène-butadiène (SBR) vulcanisé, c'est-à-dire aboutit à un réseau tridimensionnel de différentes chaînes polymères réticulées entre elles par des liaisons à base de soufre formant un composite thermodurci, dimensionnellement stable. Après sa mise en forme et son durcissement, ce dernier ne peut pas être remodelé. A ce jour, le recyclage et la réutilisation de pièces en caoutchouc vulcanisé restent complexes car le caoutchouc vulcanisé ne peut pas être remodelé ou simplement reconstitué en le dissolvant dans un solvant afin de donner au caoutchouc vulcanisé une nouvelle forme.

Les procédés de valorisation matière existants reposent sur des techniques de broyage et granulation, prépondérants à l'échelle industrielle. Néanmoins, les particules de caoutchouc broyées obtenues par cette filière sont inertes et ont une utilisation limitée à des quantités relativement faibles, assimilables à celle de charges, car les procédés employés affectent généralement de manière négative les propriétés essentielles aux performances des pièces en caoutchouc.

Des procédés de valorisation alternatifs reposent sur une dévulcanisation du caoutchouc vulcanisé usagé pour être ensuite revulcanisé seul ou en mélange avec du caoutchouc vierge et réutilisé dans des pièces en caoutchouc.

Ces procédés sont complexes et sont basés sur des traitements chimiques et thermiques très agressifs au cours desquels le réseau tridimensionnel du caoutchouc vulcanisé est démantelé et ne permettent pas, à ce jour, de ramener un caoutchouc vulcanisé à son état non durci, tel un « caoutchouc vierge ». En effet, le produit obtenu à l'issue d'un tel traitement, appelé « caoutchouc recyclé (= reclaimed rubber) », exhibe des propriétés physiques et mécaniques moins performantes que le caoutchouc vulcanisé d'origine. La matière obtenue ne peut ainsi qu'être incorporée de façon limitée dans des produits qui doivent justifier de hautes performances physiques.

De manière générale, les coûts de reprise du caoutchouc vulcanisé par les méthodes classiques de recyclage développées à l'échelle industrielle dépassent le coût de la matière vierge, et l'incorporation de caoutchouc recyclé en mélange avec du caoutchouc frais se traduit généralement par un produit ayant des propriétés physiques considérablement réduites.

Ainsi, un besoin demeure de développer un procédé de dévulcanisation permettant de retrouver un matériau caoutchouc doté de propriétés physiques permettant de le moduler ultérieurement et de le réutiliser pour produire des pièces en caoutchouc de l'industrie ferroviaire, en particulier des semelles de rail.

Le matériau polymérique développé par le Demandeur ainsi que son procédé de préparation répondent à ces besoins.

Le procédé de recyclage du caoutchouc issu de pièces usagées en caoutchouc de l'industrie ferroviaire permet d'utiliser un pourcentage supérieur, de l'ordre de 30 à 80 %, de caoutchouc recyclé dans le processus de recyclage du caoutchouc par rapport aux méthodes de recyclage de l'art antérieur, tout en fournissant une pièce en caoutchouc recyclé aux performances comparables ou supérieures.

De plus, le procédé est considéré comme un procédé vert étant donné qu'il est respectueux de l'environnement i.e. il ne génère ni pollution chimique, ni déchets secondaires, ni poussières toxiques, ni fumées, ni eaux usées... contrairement au procédé d'incinération classique des déchets, il ne génère pas non plus de dioxyde de carbone.

Le matériau polymérique obtenu est un matériau « régénéré », totalement dévulcanisé et non dégradé.

Cette régénération est réalisée grâce à un nouveau procédé appelé « métactivation » qui permet de produire une matière polymérique dévulcanisée et possédant des propriétés physiques permettant son utilisation comme matière première en quantité supérieure à celle de l'art antérieur pour produire des pièces de l'industrie ferroviaire, notamment des semelles de rail, qui ne sont aucunement valorisées à ce jour.

### Exposé de l'invention

Le Demandeur a développé un procédé qui permet de produire un matériau polymérique dévulcanisé ou « régénéré » à partir de caoutchouc vulcanisé issu de pièces usagées issues de l'industrie ferroviaire, notamment de semelles de rail. La régénération complète du caoutchouc de ces pièces usagées permet ainsi leur valorisation et de retrouver une gomme de caoutchouc « vierge ». Elles peuvent ainsi être réutilisées comme matière première pour fabriquer de nouvelles pièces à base de caoutchouc, de l'industrie ferroviaire, en particulier de semelles de rail.

Le matériau polymérique est obtenu par un procédé mis en oeuvre dans des conditions respectueuses de l'environnement, peu coûteuses et qui ne requiert pas l'adjonction d'éléments chimiques tels que des agents dévulcanisants classiquement utilisés dans les procédés de l'art antérieur.

Plus précisément, le matériau polymérique développé par le Demandeur est obtenu par mélange d'une poudre, issue de pièces usagées en caoutchouc de l'industrie ferroviaire, en particulier de semelles de rail avec un ou plusieurs plastifiant(s) à une température allant de 80 à 130 °C, ladite poudre étant obtenue par des étapes de compression et cisaillement à une température inférieure à 80°C d'un granulat issu desdites pièces usagées en caoutchouc de l'industrie ferroviaire, en particulier de semelles de rail.

Dans la présente invention, le terme « caoutchouc vulcanisé » désigne ledit caoutchouc ayant subi un procédé chimique au cours duquel il a été formulé avec des additifs dont un agent vulcanisant (par exemple le soufre) permettant la vulcanisation et a subi un traitement thermique de manière à créer des ponts entre les polymères dudit caoutchouc pour former un réseau tridimensionnel.

Par « caoutchouc dévulcanisé », on entend un caoutchouc dans lequel les ponts de réticulation à base de soufre entre les chaînes polymères ont été rompus.

Dans la présente invention, le terme « régénéré » désigne le fait que le matériau polymérique peut être réutilisé comme la matière d'origine.

Dans la présente invention, le terme « métactivation » désigne un procédé de transformation d'un granulat de caoutchouc en poudre par des étapes de compression et cisaillement à basse température contrôlée tel que décrit dans les documents FR 2946896 A1 et WO2011/004079 A2.

Dans la présente invention, le terme « poudre métactivée » désigne une poudre ayant subie une métactivation telle que décrite dans les documents FR 2946896 A1 et WO2011/004079 A2

Dans la présente invention, le terme « mélange cru » désigne le mélange avant cuisson ou vulcanisation.

Dans la présente invention, le terme « mélange-maître » désigne un mélange avec des propriétés mécaniques définies.

Dans le cadre de l'invention, les termes « semelles de rail » et « semelles sous rail » peuvent être utilisés de manière interchangeable.

### Granulat issu de pièces usagées en caoutchouc de l'industrie ferroviaire, en particulier de semelles de rail

Le granulat de caoutchouc constitue la matière première pour la fabrication de la poudre de caoutchouc, par métactivation, nécessaire à l'obtention du matériau polymérique selon l'invention.

Dans le cadre de l'invention, le granulat présente une granulométrie allant de 1 à 4 mm, de préférence de 2 à 4 mm et préférentiellement de 3 mm, mesurée par ASTM D5644.

Ce granulat est typiquement obtenu par broyage.

De préférence, le broyage est réalisé à sec.

Dans certains modes de réalisation, il est peut également être mis en oeuvre par voie humide ou semi-humide.

De façon générale, le granulat de caoutchouc peut être obtenu par des procédés classiques de broyage connus de l'art antérieur.

Typiquement, il est obtenu par broyage simple de pièces usagées en caoutchouc vulcanisé issues de l'industrie ferroviaire, en particulier de semelles de rail. Le broyage est réalisé à l'aide de machines de broyage conventionnelles bien connues de l'homme du métier telles que des machines de broyage à couteau ou à marteau ou des broyeurs et granulateurs vendus par la société MTB Recycling^{®} par exemple.

### Poudre issue de pièces usagées en caoutchouc de l'industrie ferroviaire

La poudre est obtenue par métactivation du granulat issu d'une pièce en caoutchouc.

Cette poudre est « métactivée », c'est-à-dire qu'elle est obtenue par un procédé de « métactivation » tel que décrit dans les documents FR 2946896 A1 et WO2011/004079 A2.

Ce procédé de « métactivation » est un procédé uniquement mécanique et physique comprenant des étapes de cisaillement et compression.

En d'autres termes, le procédé de métactivation est un procédé de micro-craquage à température contrôlée, en pratique à une température inférieure à 80°C, de préférence inférieure à 60 °C.

Dans des modes de réalisation, les étapes de cisaillement et compression peuvent être réalisées successivement ou simultanément.

Dans des modes de réalisation, ces étapes sont réalisées successivement.

Dans des modes de réalisation, ces étapes sont réalisées simultanément.

Le procédé est typiquement mis en oeuvre dans un réacteur comprenant un ou plusieurs compartiments installés en chaîne les uns à la suite des autres. Les compartiments sont séparés par des écluses.

Des exemples de réacteur incluent, de manière non limitative, des malaxeurs, des mélangeurs blenders, des broyeurs à meules, broyeurs à billes, crackeuses, pulvérisateurs, micronisateurs, extrudeuses monovis ou bivis, broyeurs à disques, broyeurs à haut cisaillement, broyeurs à haute énergie, broyeurs planétaires.

Le cisaillement est typiquement mis en oeuvre par des disques ou vis.

Le taux de cisaillement varie de 100 à 20 000 sec⁻¹.

La vitesse de cisaillement varie dans le compartiment, d'un cisaillement lent à un cisaillement très rapide.

L'homme du métier sur la base de ces connaissances saura adapter le la vitesse de cisaillement en vue d'optimiser cette étape.

L'application d'un taux de compression variant de 2 à 20 fois permet d'obtenir la poudre selon l'invention.

Le contrôle de la température au cours du procédé est importante. En effet, une température trop élevée conduit à une dégradation des polymères du caoutchouc et à la rupture éventuelle des liaisons carbonées. La rupture de ces liaisons signifie la dépolymérisation du caoutchouc et la perte de ses propriétés essentielles mécaniques et élastiques.

Le cisaillement conduit à un fort échauffement interne du caoutchouc vulcanisé traité. Il est ainsi primordial de réguler spécifiquement la température au cours du procédé de métactivation, afin d'endiguer tout problème de dégradation thermique lié à un auto-échauffement excessif du caoutchouc vulcanisé traité selon l'invention. C'est pourquoi, il est important de contrôler la température du système. Cette dernière doit ainsi rester inférieure à 80 °C au cours du procédé, de préférence inférieure à 60 °C.

A cette température, seules les liaisons comprenant du soufre sont rompues.

Typiquement, la température peut varier de 25 à 80 °C, de préférence de 40 à 80 °C, de préférence de 50 à 75 °C, de préférence de 40 à 60 °C, de préférence de 60 à 80 °C et encore plus préférentiellement de 50 à 70 °C.

D'autre part, la compression des grains de caoutchouc produit une expansion de ces grains s'apparentant à une « explosion » des grains en particules plus fines formant la poudre selon l'invention.

Cette expansion des grains est critique pour obtenir une poudre malléable et réutilisable et qui présente les propriétés mécaniques d'un caoutchouc vierge.

La poudre ainsi obtenue présente un taux d'expansion variant de 0,5 à 1,20, de préférence de 1,0 à 1,20 et encore plus préférentiellement de 1,1 à 1,15.

En comparaison des granulats de caoutchouc, la poudre obtenue présente une densité réduite.

La densité de la poudre selon l'invention peut ainsi aller de 0,3 à 0,5, de préférence de 0,40 à 0,47.

La poudre, obtenue par le procédé de métactivation, est issue de pièces usagées en caoutchouc de l'industrie ferroviaire, en particulier de semelles de rail.

Les pièces usagées en caoutchouc de l'industrie ferroviaire sont les semelles de rail, les chaussons de traverse, les tapis d'appareil de voie et tapis de wagon.

Selon l'invention, les pièces usagées en caoutchouc sont des semelles de rail.

Etant donné que le caoutchouc est le composant majoritaire de des semelles, sa teneur dans lesdites semelles est d'au moins 30 % en poids par rapport au poids de la semelle, préférentiellement de 40 à 90 % en poids, de préférence de 40 à 80 % en poids, de préférence de 40 à 70 % en poids et encore plus préférentiellement de 40 à 60 % en poids.

Typiquement, le caoutchouc compris dans les semelles est un caoutchouc vulcanisé choisi dans le groupe comprenant le caoutchouc naturel, le polyisoprène, le caoutchouc styrène-butadiène (SBR), le polybutadiène (BR), le caoutchouc nitrile-hydrogéné (HNBR), le caoutchouc nitrile (NBR), chlorobutadiène (CR), les caoutchoucs éthylène-propylène-diène monomère (EPDM), le caoutchouc éthylène-propylène (EPM), le polyéthylène chlorosulfoné (CSM), le caoutchouc isobutylène-isoprène (IIR), polyuréthanes, le caoutchouc acrylique (ACM) et leur combinaison.

Des exemples de caoutchouc vulcanisé préférés dans le cadre de l'invention sont le caoutchouc naturel (NR), la caoutchouc butadiène (BR) et le caoutchouc styrène-butadiène seul ou en mélange.

De préférence, le caoutchouc vulcanisé est un mélange de NR/SBR.

Typiquement, la teneur en caoutchouc contenu dans la poudre décrite ci-dessus est d'au moins 30 % en poids, de préférence d'au moins 40 % en poids, de préférence d'au moins 50 % en poids et encore plus préférentiellement d'au moins 60 %.

Dans certains modes de réalisation, la teneur en caoutchouc contenu dans la poudre va de 30 à 80 % en poids, de préférence de 35 à 80 % en poids, de préférence de 35 à 70 % en poids, de préférence de 40 à 75 % en poids et encore plus préférentiellement de 40 à 55 % en poids.

La poudre obtenue par ce procédé contient du caoutchouc partiellement dévulcanisé.

Ces conditions physiques douces permettent de « casser » uniquement les liaisons C-S et S-S sans rompre de liaisons C-C et évitent ainsi une dépolymériseration ou une dégradation des polymères contenus dans le caoutchouc de départ.

Le caoutchouc contenu dans cette poudre présente des propriétés mécaniques et élastiques similaires à un caoutchouc vierge.

Ce caoutchouc est malléable, réutilisable, revulcanisable, réticulable, recompoundable.

Le taux de dévulcanisation, du caoutchouc contenu dans la poudre, mesuré par la technique Swelling de la fraction gel selon la méthode Soxhlet et l'équation Flory-Rehner par exemple, varie de 5 à 99 % par rapport à ou aux élastomère(s) vulcanisés contenus dans le caoutchouc usagé, de préférence de 10 à 90 % et de manière encore plus préférentielle de 20 à 70 %.

Typiquement, la poudre obtenue présente une taille particulaire allant de 1 à 1000 µm, de préférence de 5 à 500 µm et encore plus préférentiellement de 10 à 400 µm.

Le procédé de métactivation permet de conserver la structure des polymères du caoutchouc sauf les ponts soufrés.

Ainsi, le taux de dégradation, mesuré en fraction gel par la méthode Soxhlet par exemple, est inférieur à 30 % et va de préférence de 10 à 20 %.

### Matériau polymérique régénéré

Le matériau polymérique, développé par le Demandeur est obtenu par mélange d'une poudre, issue de pièces usagées en caoutchouc de l'industrie ferroviaire, en particulier des semelles de rail, avec un ou plusieurs plastifiants à une température allant de 80 et 130 °C, ladite poudre étant obtenue par des étapes de compression et cisaillement à une température inférieure à 80°C d'un granulat issu desdites pièces usagées en caoutchouc de l'industrie ferroviaire, en particulier des semelles de rail.

Le matériau peut se présenter sous forme d'une pâte ou d'une poudre à température ambiante.

Dans le cadre de l'invention, on entend par « température ambiante » une température allant de 10 à 30 °C, de préférence de 20 à 25 °C.

Le matériau est de préférence sous forme d'une poudre à température ambiante.

Lorsque ce matériau est chauffé, il se transforme en une pâte. L'obtention d'une pâte, sous l'effet de la température, est importante et permet de disposer d'une structure homogène et compatible avec d'autres matières et, en même temps, la réaction ultérieure du matériau polymérique avec les composés nécessaires pour produire une nouvelle pièce de l'industrie ferroviaire, en particulier des semelles de rail.

En d'autres termes, la pâte obtenue garantit l'obtention d'un mélange homogène lors de la réaction ultérieure du matériau polymérique avec divers adjuvants, par exemple pour préparer un mélange cru.

La pâte obtenue, sous l'effet de la température, présente ainsi une très bonne aptitude à la reformulation dans des procédés de recyclage de caoutchouc, qui est supérieure à celle de la poudre issue directement du procédé de métactivation.

Le caoutchouc contenu dans le matériau polymérique est en effet malléable et possède des propriétés mécaniques et élastiques similaires à un caoutchouc vierge ce qui facilite sa réaction avec d'autres matériaux tel du caoutchouc vierge lors de la préparation d'un mélange cru par exemple.

De façon générale, les pièces usagées en caoutchouc de l'industrie ferroviaire incluent, de manière non limitative, les semelles de rail, les chaussons de traverse, les tapis d'appareil de voie et tapis de wagon.

Le matériau polymérique obtenu comprend du caoutchouc complètement dévulcanisé. De plus, le soufre, présent dans le caoutchouc contenu dans la poudre telle que décrite ci-dessus, n'est plus présent. De préférence, le matériau se présente sous forme d'une pâte ou d'une poudre.

Le matériau polymérique ainsi obtenu est régénéré et peut être ré-utilisé comme un mélange cru, un mélange-maître ou comme un caoutchouc vierge.

Le mélange de la poudre issue de caoutchouc vulcanisé avec un ou plusieurs plastifiants est typiquement réalisé à une température allant de 80 à 130 °C, de préférence de 90 à 120 °C, de préférence de 80 à 120 °C, préférentiellement de 90 à 110 °C.

Une température minimale de 80 °C, voire 90 °C, est nécessaire pour évaporer le soufre présent dans le caoutchouc.

Ces plages de température restent relativement douces en comparaison des température divulguées dans l'art antérieur, souvent aux alentours de 200-300 °C.

Ces températures réduites participent également à la préservation des liaisons carbonées et permettent de conserver l'intégrité du caoutchouc et notamment ses propriétés mécaniques et élastiques.

De façon avantageuse, le temps de mélange est court et n'excède pas 1 h. Ainsi, le temps de mélange va typiquement de 3 à 20 min, de préférence de 4 à 15 min et encore plus préférentiellement de 5 à 10 min.

Dans certains modes de réalisation, le, soufre est complètement évaporé après 5 min de mélange.

Dans certains modes de réalisation, le soufre est complètement évaporé après 8 min de mélange.

Dans certains modes de réalisation, le soufre est complètement évaporé après 10 min de mélange.

L'étape de mélange peut être mise en oeuvre dans un mélangeur interne, notamment un mélangeur de type Banbury^{®}, un mélangeur externe, un mélangeur blender, un malaxeur, un broyeur à deux cylindres ou une extrudeuse-mélangeur.

Le ou les plastifiants utilisés dans le mélange permettent l'obtention du matériau sous forme de pâte, en particulier lorsque celui-ci est chauffé. Des exemples de plastifiants incluent, de façon non limitative, des huiles telles que les huiles végétales, minérales, huiles non pétrolières, des acides gras tels que l'acide stéarique ou un de ses sels et les acides gras d'huile de tall (TOFA).

Le ou les plastifiants sont typiquement incorporés à une teneur de 5 à 10 % en poids du mélange.

En outre, des additifs traditionnels dans l'industrie du caoutchouc peuvent également être ajoutés à ce mélange, tel que des polymérisants, des antioxydants, des charges renforçantes, des résidus minéral, des stabilisants, compatibilisants, accélérateurs, retardateurs, etc...

Les antioxydants sont par exemple le 6PPD, le 2,2,4-trimethyl-1,2-dihydroquinoline (TMQ) et le dioctyldiphenylamine.

Les charges renforçantes typiquement utiles dans le cadre de l'invention comprennent le noir de carbone, la silice, argile, fibre organique, poudre de métal inorganique, poudre minérale, talc, sulfate de calcium, silicate de calcium, etc...

Une charge renforçante préférée est le noir de carbone.

Des polymérisants peuvent être par exemple l'acétate de vinyle, des isocyanates, silanes, résines époxy ou résines phénoliques.

Les compatibilisants et stabilisants sont des additifs connus du domaine du caoutchouc et de l'homme de l'art.

Les compatibilisants comprennent par exemple les acrylates.

Des exemples non limitatifs d'accélérateurs comprennent le *N-*cyclohexylbenzothiazole-2-sulfénamide (CBS) et *N*,*N'*-dicyclohexylbenzothiazole-2-sulfénamide (DCBS).

Un retardateur préféré dans le cadre de l'invention est le N-(cyclohexylthio)phthalimide (PVI).

L'homme du métier, sur la base de ses connaissances, sera en mesure de sélectionner les additifs adéquats et leur teneur selon les propriétés désirées de la pièce de l'industrie ferroviaire. Selon l'invention, cette pièce est une semelle de rail.

La teneur de ces additifs dans le mélange n'excède pas 5 % en poids, de préférence 2 % en poids et encore plus préférentiellement 1 % en poids.

Le matériau polymérique obtenu peut être utilisé comme mélange cru ou mélange-maître ou caoutchouc vierge.

Dans des modes de réalisation, le matériau polymérique est utilisé pour former un mélange cru.

Dans des modes de réalisation, le matériau polymérique est utilisé pour former un mélange-maître.

Dans des modes de réalisation, le matériau polymérique peut également être mis en mélange avec un mélange cru ou un mélange-maître.

Le mélange cru est typiquement préparé par compoundage.

Il est ensuite mis en forme et vulcanisé par compression, injection, ou extrusion pour produire une nouvelle pièce en caoutchouc de l'industrie ferroviaire, en particulier de semelles de rail.

### Pièces en caoutchouc de l'industrie ferroviaire, en particulier des semelles de rail

La pièce finale est fabriquée après des étapes successives de compoundage, mise en forme et cuisson.

Le compoundage permet de préparer par exemple un mélange cru, préparé dans un mélangeur.

La température de mélange peut varier de 60 à 140 °C, de préférence de 80 à 140 °C, de préférence de 80 à 110 °C, préférentiellement elle est de 90 °C.

Ce mélange cru comprend typiquement un matériau polymérique selon l'invention seul ou en mélange avec du caoutchouc vierge.

Dans ce mélange cru, le matériau polymérique est présent à une teneur d'au moins 30 % en poids, de préférence d'au moins 40 % et encore plus préférentiellement d'au moins 50 % en poids.

La teneur en caoutchouc totale dans le mélange cru peut aller de 30 à 90 % en poids, de préférence de 35 à 80 % en poids et encore plus préférentiellement de 40 à 70 % en poids

L'invention concerne également une pièce en caoutchouc de l'industrie ferroviaire, en particulier une semelle de rail comprenant un matériau polymérique selon l'invention. Le matériau polymérique est présent à une teneur d'au moins 30 % en poids.

Dans des modes de réalisation, la pièce en caoutchouc de l'industrie ferroviaire, en particulier une semelle de rail, comprend en outre du caoutchouc vierge.

Avantageusement, la pièce, en particulier une semelle de rail, comprend au moins 30 % en poids de matériau polymérique et du caoutchouc vierge.

De préférence, la pièce, en particulier une semelle de rail, comprend au moins 30 % en poids de matériau polymérique, du caoutchouc vierge et des additifs.

De préférence, la pièce, en particulier une semelle de rail, comprend une teneur en caoutchouc totale (matériau polymérique seul ou matériau polymérique + caoutchouc vierge) allant de 30 à 80 % en poids par rapport au poids de la semelle, de préférence de 40 à 70 % en poids et préférentiellement de 45 à 60 % en poids.

Dans des modes de réalisation, le ratio massique matériau polymérique/caoutchouc vierge est compris de 10/1 à 1/2, de préférence de 4/1 à 1/2.

Dans des modes de réalisation, la pièce comprend le matériau polymérique en mélange avec un mélange cru ou un mélange-maître ou du caoutchouc vierge. De préférence, la pièce comprend le matériau selon l'invention en mélange avec du caoutchouc vierge.

Il est essentiel qu'au moins 30 % de matière première en caoutchouc de la pièce en caoutchouc, en particulier une semelle de rail provienne de déchets des pièces usagées en caoutchouc de l'industrie ferroviaire, en particulier une semelle de rail afin que la pièce finie soit qualifiée de « pièce verte ».

Les pièces en caoutchouc de l'industrie ferroviaire sont les semelles de rail, les chaussons de traverse, les tapis d'appareil de voie et les tapis de wagon.

Selon l'invention, la pièce en caoutchouc est une semelle de rail.

Dans des modes de réalisation préférés, la pièce en caoutchouc est préparée à partir d'un mélange cru comprenant le matériau polymérique décrit ci-dessus seul ou en mélange avec du caoutchouc vierge.

Dans des modes de réalisation, le matériau polymérique est présent à une teneur d'au moins 30 % en poids, de préférence d'au moins 40 % et encore plus préférentiellement d'au moins 50 % en poids. Selon l'invention, la pièce en caoutchouc est une semelle de rail.

De préférence, le caoutchouc vierge peut être du NR ou du SBR ou un mélange de NR/SBR.

Dans ces modes de réalisation, la proportion matériau polymérique/caoutchouc vierge varie de 5 à 80 %, de préférence de 10 à 80 %, de préférence de 30 à 80 %, de préférence de 40 à 60 % en poids.

Des exemples de caoutchouc vierge contenu dans la pièce selon l'invention comprennent le caoutchouc naturel, polyisoprène, le caoutchouc styrène-butadiène (SBR), le polybutadiène (BR), le caoutchouc nitrile-hydrogéné (HNBR), le caoutchouc nitrile (NBR), chlorobutadiène (CR), les caoutchoucs éthylène-propylène-diène monomère (EPDM), le caoutchouc éthylène-propylène (EPM), le polyéthylène chlorosulfoné (CSM), le caoutchouc isobutylène-isoprène (IIR), polyuréthanes, le caoutchouc acrylique (ACM) et leur combinaison.

Le caoutchouc contenu dans la pièce selon l'invention est un caoutchouc vulcanisé.

Avantageusement, la pièce en caoutchouc comprend une teneur en caoutchouc (matériau polymérique seul ou en mélange avec du caoutchouc vierge) allant de 30 à 90 % en poids, de préférence de 35 à 70 % en poids et encore plus préférentiellement de 40 à 60 % en poids.

Dans des modes de réalisation, la pièce en caoutchouc comprend :
- de 40 à 50 % en poids de caoutchouc,
- de 4 à 10 % en poids de plastifiants,
- de 15 à 30 % en noir de carbone et
- de 15 à 30 % en poids de résidus minéral.

Dans des modes de réalisation, la pièce en caoutchouc comprend :
- de 30 à 40 % en poids de matériau polymérique,
- de 0 à 20 % en poids de caoutchouc vierge et
- de 10 à 40 % en noir de carbone

La pièce peut en outre comprendre des plastifiants et/ou des résidus minéraux. L'homme du métier saura adapter la quantité des différents composants afin de ne pas dépasser le 100 % en poids.

La nature des plastifiants, caoutchouc et résidus minéral est telle que décrite ci-dessus.

Dans des modes de réalisation, le caoutchouc contenu dans la pièce selon l'invention, en particulier une semelle de rail, est issu uniquement du matériau polymérique décrit ci-dessus.

Dans des modes de réalisation, le caoutchouc contenu dans la pièce selon l'invention, en particulier une semelle de rail, est issu d'un mélange du matériau polymérique décrit ci-dessus et de caoutchouc vierge.

Dans des modes de réalisation, la pièce, en particulier une semelle de rail, est préparée à partir d'un mélange-maitre comprenant le matériau polymérique selon l'invention.

Dans des modes de réalisation, le ratio matériau polymérique/caoutchouc vierge peut typiquement varier de 10/90 à 90/10, de préférence 30/70 à 70/30 et encore plus préférentiellement 50/50.

La pièce selon l'invention, en particulier une semelle de rail, comprend en outre des additifs choisis dans le groupe comprenant les polymérisants, les comptabilisants, les charges renforçantes, les accélérateurs, les antioxydants, les retardateurs, les activateurs de vulcanisation, les agents vulcanisants et autres additifs traditionnellement utilisés par l'industrie du caoutchouc et connus de l'homme du métier.

La sélection de ces additifs ainsi que les quantités à utiliser dépendent des caoutchoucs utilisés et de l'application finale de la pièce de l'industrie ferroviaire et sont facilement sélectionnables par une personne ayant des compétences ordinaires dans l'art.

Une charge renforçante préférée est le noir de carbone.

Dans la présente invention, la pièce de l'industrie ferroviaire, en particulier la semelle de rail est mise en forme par les techniques classiques de transformation du caoutchouc connues de l'homme du métier.

La pièce est ainsi typiquement mise en forme par injection, extrusion ou compression du mélange cru ou mélange-maître comprenant le matériau polymérique selon l'invention.

De manière avantageuse, le matériau polymérique selon l'invention permet de produire une pièce en caoutchouc recyclée pour l'industrie ferroviaire, en particulier des semelles de rail possédant les propriétés mécaniques et physiques comparables ou supérieures à celles d'une pièce produite par un procédé classique.

Son allongement à la rupture varie typiquement de 200 à 700 %, de préférence de 300 à 600 %, mesurée par ASTM D412

La semelle de rail obtenue selon l'invention présente une dureté allant de 30 à 90 Shore A, de préférence de 40 à 80 Shore A mesurée selon la norme ASTM D2240.

La semelle de rail obtenue selon l'invention présente également une densité allant de 0,9 à 1,5 mesurée selon la méthode d'entassement.

L'invention concerne également une semelle de rail comprenant un matériau polymérique tel que décrit ci-dessus.

L'invention concerne également un procédé de préparation du matériau polymérique précédemment décrit comprenant les étapes successives suivantes :
a) Broyage et granulation de caoutchouc vulcanisé issu de pièces usagées en caoutchouc de l'industrie ferroviaire, en particulier de semelles de rail,
b) Compression et cisaillement à une température inférieure à 80°C du granulat de caoutchouc formé à l'étape a)
c) Mélange des poudres obtenues à l'étape b) avec un ou plusieurs plastifiants à une température allant de 80 à 130 °C

La température de l'étape b) est inférieure à 80 °C, de préférence inférieure à 60 °C.

La température à l'étape c) va de préférence de 80 à 120 °C et préférentiellement de 90 à 120 °C.

L'invention concerne également un procédé de préparation d'une pièce en caoutchouc de l'industrie ferroviaire, en particulier une semelle de rail comprenant les étapes suivantes :
a) Dévulcanisation du caoutchouc d'une pièce usagée issue de l'industrie ferroviaire, en particulier d'une semelle de rail pour produire un matériau polymérique tel que décrit ci-dessus,
b) Compoundage du matériau polymérique obtenu à l'étape a), et
c) Mise en forme et vulcanisation

Selon l'invention, la pièce en caoutchouc préparée est une semelle de rail.

Le compoundage du matériau polymérique permet la formation d'un mélange cru ou mélange-maître.

La vulcanisation est mise en oeuvre par des procédés classiques bien connus de l'homme du métier comprenant l'addition d'agents vulcanisants.

Des exemples d'agents vulcanisants connus de l'art antérieur comprennent les composés à base de soufre, donneurs de soufre et accélérateurs de vulcanisation, les résines de vulcanisation (par ex. à base de résorcine-formaldéhyde) ou des peroxydes.

La mise en forme de la pièce finale est typiquement obtenue par injection, extrusion ou compression, de façon avantageuse par extrusion.

Le procédé permet de fournir une nouvelle pièce de l'industrie ferroviaire, en particulier de semelles de rail recyclées, aux performances comparables aux pièces obtenues contenant uniquement du caoutchouc « neuf ».

Les exemples qui suivent sont donnés à titre illustratif, mais ne doivent en aucun cas être considérés comme limitatifs de la présente invention.

### Figure

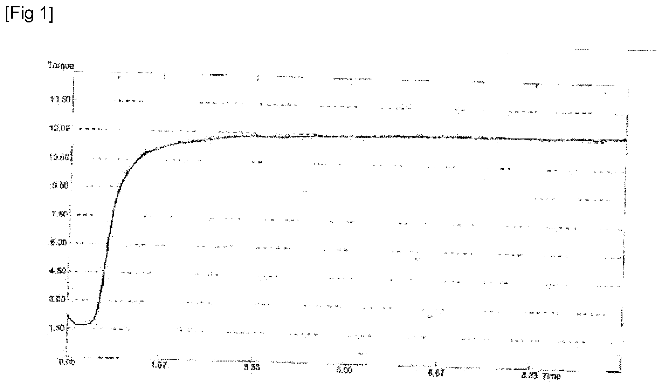

La Figure 1 présente une courbe du suivi rhéologique lors de l'étape de cuisson d'une semelle de rail en préparation.

### Exemples

### Exemple 1 : composition et caractéristiques physico-chimiques d'une semelle de rail

La composition chimique d'une semelle usagée de rail traditionnelle est décrite dans le tableau 1a et ses caractéristiques physico-chimiques sont présentées dans le tableau 1b.

**Tableau 1a : Composition chimique d'une semelle de rail**

| **Composants** | **Teneur en parts (phr), en poids, pour 100 parts de caoutchouc** |
|---|---|
| *Caoutchouc naturel SMR CV 60* | 100 |
| *Oxyde de zinc* | 5,0 |
| *Noir de carbone SRF N-774* | 80,0 |
| *TMQ* | 1,0 |
| *IPPD* | 1,5 |
| *Struktol Zeh-DL* | 3,0 |
| *Protecteur G35* | 5,0 |
| *MBS* | 1,44 |
| *Struktol TBTD 65* | 0,65 |
| *Struktol SU 135* | 0,8 |

**Tableau 1b : Caractéristiques physico-chimiques d'une semelle de rail**

| **Caractéristiques physico-chimiques** | **Valeur** |
|---|---|
| *Cuisson* | 15 minutes / 150 °C |
| *Module 100* | 5,0 MPa |
| *Module 300* | 17,9 MPa |
| *Résistance à la traction* | 18,9 MPa |
| *Bande d'absorption efficace* | 320 % |
| *Rebond* | 37 % |
| *Dureté* | 66 Shore A |
| *Densité relative* | 1,19 g.cm⁻³ |
| *DRC (22 h*/ *70 °C)* | 18 % |
| *Rhéomètre à disque oscillant (150 °C)* | T₂ : 5,2 / T₉₀ : 9,0 |
| *Viscosité de Mooney (ML(1*+*4) 100* °*C)* | 80 |

### Exemple 2 : Préparation de matériaux polymériques selon l'invention

La semelle de rail décrite à l'exemple 1 est broyée et un granulat de taille particulaire de 3 mm est obtenu.

Ce granulat est ensuite soumis au procédé de métactivation dans une machine de métactivation à une température inférieure à 80°C tel que décrit dans les documents FR 2946896 A1 et WO2011/004079 A2.

La poudre obtenue présente une densité de 0,45 et une granulométrie inférieure à 0,4 mm mesurée par ASTM D5644.

Sa composition est comme suit :
- du caoutchoucs NR/SBR/BR (57%)
- du noir de carbone (28%).
- Extrait d'acétone (6 %)
- Cendres (9%)

Cette poudre est utilisée pour fabriquer les matériaux polymériques 2A, 2B et 2C suivants.

### Matériau polymérique 2A

La poudre est introduite dans un mélangeur avec du TOFA (5 phr). Le mélange est chauffé à 90 °C pendant 10 min. La poudre se transforme en pâte. Le matériau polymérique 2A est laissé à refroidir puis est collecté.

### Matériau polymérique 2B

La poudre est introduite dans un mélangeur avec de l'huile végétale (5 phr). Le mélange est chauffé à 90 °C pendant 10 min. La poudre se transforme en pâte. Le matériau polymérique 2B est laissé à refroidir puis est collecté.

### Matériau polymérique 2C

La poudre est introduite dans un mélangeur avec du TOFA (5 phr), du 6PPD (1,5 phr) et du 2,2,4-trimethyl-1,2-dihydroquinoline (TMQ) (1,5 phr). Le mélange est chauffé à 90 °C pendant 10 min. La poudre se transforme en pâte. Le matériau polymérique 2C est laissé à refroidir puis est collecté.

### Exemple 3 : Préparation de semelles de rail selon l'invention

### Semelle 3A préparée à partir de 30 % de matériau polymérique 2A

Dans un mélangeur interne de type Banbury sont introduits le matériau polymérique 2A (67 phr), du caoutchouc naturel (33 phr), du noir de carbone HAF774 (55 phr), de l'huile de paraffine (5 phr), du 6PPD (1,5 phr), TMQ (1,5 phr), de la paraffine cire (2 phr), oxyde de zinc (5 phr) et de l'acide stéarique (1 phr).

Le mélange est chauffé à 90 °C dans un mélangeur Banbury.

Les additifs suivants sont ensuite versés au cours de la réaction, tels que connus de l'homme du métier, du tetramethylthiuram disulfide (TMTD) (0,75 phr), du 2,2-dithiobis(benzothiazole) (MBTS) (1,75 phr), du dipropylène glycole (DPG) (0,75 phr) et du soufre (0,75 phr).

La pièce est cuite à 150 °C pendant 15 min.

Cette semelle 3A présente un module 300 de 15 MPa, un allongement à la rupture de 460 % et une dureté de 72 Shore A.

### Exemple 4 : Etudes du comportement rhéologique, d'après ASTM 2084, d'une semelle de rail selon l'invention lors de l'étape de cuisson

La vulcanisation du caoutchouc contenu dans une semelle de rail fabriqué à partir du matériau polymérique selon l'invention est étudiée.

Le profil rhéologique du caoutchouc d'une semelle de rail en préparation comprenant 40 % de matériau polymérique, lors de sa cuisson, est suivi par rhéométrie sur un rhéomètre à disque oscillant.

La température de cuisson est de 160 °C et la durée est de 10 min.

La courbe obtenue est présentée à la Figure 1.

Le changement de courbe témoigne d'une modification chimique du caoutchouc et atteste ainsi de la vulcanisation du caoutchouc contenu dans la semelle en préparation. La réticulation est très rapide et confirme que le matériau polymérique obtenu selon l'invention se comporte comme un caoutchouc vierge.

## Revendications

1. Matériau polymérique obtenu par mélange d'une poudre, issue de pièces usagées en caoutchouc de semelles de rail comprenant au moins 30% en poids de caoutchouc, avec un ou plusieurs plastifiants à une température allant de 80 et 130 °C, ladite poudre étant obtenue par des étapes de compression et cisaillement à une température inférieure à 80°C d'un granulat issu desdites semelles de rail.

2. Matériau polymérique selon la revendication 1 **caractérisé en ce que** la poudre a une taille particulaire allant de 1 à 1000 µm, de préférence de 5 à 500 µm et encore plus préférentiellement de 10 à 400 µm.

3. Matériau polymérique selon l'une des revendications précédentes **caractérisé en ce que** les semelles de rail comprennent du caoutchouc choisi dans le groupe comprenant le caoutchouc naturel, polyisoprène, le caoutchouc styrène-butadiène (SBR), le polybutadiène (BR), le caoutchouc nitrile-hydrogéné (HNBR), le caoutchouc nitrile (NBR), chlorobutadiène (CR), les caoutchoucs éthylène-propylène-diène monomère (EPDM), le caoutchouc éthylène-propylène (EPM), le polyéthylène chlorosulfoné (CSM), le caoutchouc isobutylène-isoprène (IIR), polyuréthanes, le caoutchouc acrylique (ACM) et leur combinaison.

4. Matériau polymérique selon l'une des revendications précédentes **caractérisé en ce que** le ou les plastifiants sont choisis dans le groupe comprenant des huiles telles que les huiles végétales, minérales, huiles non pétrolières, des acides gras tels que l'acide stéarique ou un de ses sels et les acides gras d'huile de tall (TOFA).

5. Matériau polymérique selon l'une des revendications précédentes **caractérisé en ce que** le granulat a une granulométrie allant de 1 à 4 mm, de préférence de 2 à 4 mm et préférentiellement de 3 mm.

6. Semelle de rail **caractérisée en ce qu'**elle comprend un matériau polymérique objet de l'une des revendications 1 à 5.

7. Semelle de rail selon la revendication 6, **caractérisée en ce qu'**elle comprend du caoutchouc vierge.

8. Semelle de rail selon l'une des revendications 6 ou 7 **caractérisée en ce que** le matériau polymérique est présent à une teneur d'au moins 30 % en poids.

9. Semelle de rail selon l'une des revendications 6 à 8 **caractérisée en ce qu'**elle comprend :
- entre 30 et 40 % en poids de de matériau polymérique,
- entre 0 et 20 % de caoutchouc vierge,
- entre 10 et 40 % en poids de noir de carbone.

10. Semelle de rail selon l'une des revendications 6 à 9 **caractérisée en ce qu'**elle comprend une teneur en caoutchouc totale (matériau polymérique seul ou matériau polymérique + caoutchouc vierge) allant de 30 à 80 % en poids par rapport au poids de la semelle, de préférence de 40 à 70 % en poids et préférentiellement de 45 à 60 % en poids.

11. Semelle de rail selon la revendications 9, **caractérisée en ce que** le caoutchouc vierge est choisi dans le groupe comprenant le caoutchouc naturel, polyisoprène, le caoutchouc styrène-butadiène (SBR), le polybutadiène (BR), le caoutchouc nitrile-hydrogéné (HNBR), le caoutchouc nitrile (NBR), chlorobutadiène (CR), les caoutchoucs éthylène-propylène-diène monomère (EPDM), Le caoutchouc éthylène-propylène (EPM), le polyéthylène chlorosulfoné (CSM), le caoutchouc isobutylène-isoprène (IIR), polyuréthanes, le caoutchouc acrylique (ACM) et leur combinaison.

12. Semelle de rail selon la revendication 10 **caractérisée en ce que** le caoutchouc vierge est un mélange de NR/SBR.
